(19) Europäisches Patentamt
European Patent Office
Office européen des brevets

(11) **EP 1 860 796 A1**

(12) **EUROPEAN PATENT APPLICATION**
published in accordance with Art. 158(3) EPC

(43) Date of publication:
**28.11.2007 Bulletin 2007/48**

(51) Int Cl.:
*H04B 7/24* (2006.01)   *H04B 7/15* (2006.01)
*H04B 7/26* (2006.01)

(21) Application number: **06730295.0**

(22) Date of filing: **28.03.2006**

(86) International application number:
**PCT/JP2006/306347**

(87) International publication number:
**WO 2006/106692 (12.10.2006 Gazette 2006/41)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **30.03.2005 JP 2005098020**
**05.12.2005 JP 2005351232**

(71) Applicant: **MATSUSHITA ELECTRIC INDUSTRIAL CO., LTD.**
**Osaka 571-8501 (JP)**

(72) Inventors:
• **MIYOSHI, Kenichi**
**Matsushita Electric Industrial Co.Ltd**
**2-1-61 Shiromi, Chuo-ku**
**Osaka 540-6207 (JP)**

• **NISHIO, Akihiko**
**Matsushita Electric Industrial Co.Ltd**
**2-1-61 Shiromi, Chuo-ku**
**Osaka 540-6207 (JP)**
• **HORIUCHI, Ayako**
**Matsushita Electric Industrial Co.Ltd**
**2-1-61 Shiromi, Chuo-ku**
**Osaka 540-6207 (JP)**
• **MORINO, Hiroaki**
**Matsushita Electric Industrial Co.Ltd**
**2-1-61 Shiromi, Chuo-ku**
**Osaka 540-6207 (JP)**

(74) Representative: **Grünecker, Kinkeldey, Stockmair & Schwanhäusser Anwaltssozietät**
**Maximilianstrasse 58**
**80538 München (DE)**

(54) **WIRELESS COMMUNICATION APPARATUS AND WIRELESS COMMUNICATION METHOD**

(57)   A wireless communication method capable of selecting an optimum relay station, while preventing degradation of the throughput. According to this wireless communication method, in a frame 2, a relay station (1) has a line quality being equal to or greater than Th and hence decides that the delay amount be $\Delta t1$, while a relay station (2) has a line quality being less than Th and hence decides that the delay amount be $\Delta t2$. The relay station (1) uses $\Delta t1$ of the frame 2 to transmit a relayed signal to a base station. On the other hand, recognizing, by a lapse of $\Delta t2$, that the relay station (1) used $\Delta t1$ to transmit the relayed signal, the relay station (2) stops the transmission of the relayed signal. Accordingly, the base station receives only the relayed signal from the relay station (1) having the better line quality. Thus, when the line quality of the relay station (1) is better than that of the relay station (2), the relayed signal from the relay station (1) can be preferentially transmitted.

FIG.3

## Description

Technical Field

The present invention relates to a wireless communication apparatus and wireless communication method.

Background Art

In recent years, with the multimediatization of information in cellular mobile communication systems as represented by mobile telephones or the like, it is becoming popular to transmit not only audio data, but also large amounts of data such as still pictures, moving pictures and the like. To realize the transmission of such large amounts of data, a technology in which a high-frequency wireless band is used to obtain a high-transmission rate is being actively studied.

However, when a high-frequency wireless band is used, although a high transmission rate can be expected in a short distance, attenuation due to transmission distance becomes greater as the distance increases. Accordingly, when the mobile communication system employing a high-frequency wireless band is actually operated, the coverage area of each base station becomes small, which thus requires that a larger number of base stations be set up. Since the set-up of base stations involves large costs, a technology is strongly demanded for realizing communication services which employ a high-frequency wireless band and preventing an increase in the number of base stations.

To address this demand, various relay technologies are investigated in which relay stations are set up between a mobile station and a base station, and communication between the mobile station and the base station is carried out via these relay stations. According to one of such relay technologies, a plurality of repeater points (corresponding to relay stations) are set up, and an access point (corresponding to a base station) selects one or more repeater points to carry out relay, based on both channel quality between a mobile terminal (corresponding to a mobile station) and the repeater points and channel quality between the repeater points and the access point (refer, for instance, to Patent Document 1).

Patent Document 1: Japanese Patent Application Laid-Open No.2004-254308

Disclosure of Invention

Problems to be Solved by the Invention

However, in the relay technology described in the above-mentioned Patent Document 1, since a repeater point is selected to carry out relay under centralized control at the access point, it is necessary to concentrate all the channel qualities between the mobile station and a plurality of repeater points and the channel qualities between a plurality of repeater points and the access point, at the access point. Due to this, if the frequency of reporting channel quality to the access point, to select an optimal access point in accordance with a channel quality that varies over time, is increased, the amount of signaling in the link to the access point (uplink) increases, which causes the throughput to deteriorate. Also, since selection is performed by centralized control at the access point, signaling becomes necessary for reporting the selection results from the access point to each repeater point, and this signaling as well, is one of causes leading to throughput deterioration. Moreover, the amount of processing required by the access point to select the repeater points increases, as the number of repeater points increases.

It is therefore an object of the present invention is to provide a wireless communication apparatus and wireless communication method capable of selecting an optimal relay station while preventing a deterioration of throughput.

Means for Solving the Problem

The mobile wireless communication apparatus of the present invention relays and transmits a transmission signal from a first wireless communication apparatus to a second wireless communication apparatus, and adopts a configuration having: a receiving section that receives the transmission signal; a delay section that delays a received signal by an amount of delay in accordance with one of channel quality between the wireless communication apparatus and the second wireless communication apparatus and a modulation and coding scheme level in the relay transmission; and a transmitting section that transmits the delayed signal to the second wireless communication apparatus.

Advantageous Effects of the Invention

According to the present invention, it is possible to prevent deterioration of throughput and select an optimal relay station.

Brief Description of Drawings

FIG.1 is a configuration diagram of a mobile communication system according to each embodiment;
FIG.2 is a look-up table according to embodiment 1;
FIG.3 is a sequence diagram according to embodiment 1;
FIG.4 is a sequence diagram according to embodiment 1;
FIG.5 is a block diagram showing a configuration of a relay station according to embodiment 1;
FIG. 6 is an operation flow chart of the relay station according to embodiment 1;
FIG.7 is a look-up table according to embodiment 2;
FIG.8 is a sequence diagram according to embodiment 2;
FIG.9 is a block diagram showing a configuration of a relay station according to embodiment 2;
FIG. 10 is an operation flow chart of the relay station according to embodiment 2;
FIG.11A is a look-up table according to embodiment 3;
FIG.11B is a look-up table according to embodiment 3;
FIG. 12 is a sequence diagram according to embodiment 3;
FIG.13A is a look-up table according to embodiment 3;
FIG.13B is a look-up table according to embodiment 3;
FIG.14 is a sequence diagram according to embodiment 3;
FIG.15 is a block diagram showing a configuration of a relay station according to embodiment 3;
FIG. 16 is an operation flow chart of the relay station according to embodiment 3;
FIG.17A is a look-up table according to embodiment 3;
FIG.17B is a look-up table according to embodiment 3;
FIG.18 is a look-up table according to embodiment 4;
FIG.19 is a sequence diagram according to embodiment 4; and
FIG.20 is an operation flow chart of a relay station according to embodiment 4.

Best Mode for Carrying Out the Invention

Next, embodiments of the present invention will be described in detail with reference to the accompanying drawings. The wireless communication apparatus that will be described in the following text is a wireless communication apparatus adapted to relay and transmit a transmission signal from a first wireless communication apparatus to a second wireless communication apparatus, and is mounted, for instance, in a wireless communication relay station apparatus (hereinafter simply "relay station") to be used in a mobile communication system. In the following embodiments, the wireless communication apparatus that performs relay-transmission will be described as a relay station, the first wireless communication apparatus as a wireless communication mobile station apparatus (hereinafter simply "mobile station"), and the second wireless communication apparatus as a wireless communication base station apparatus (hereinafter simply "base station").

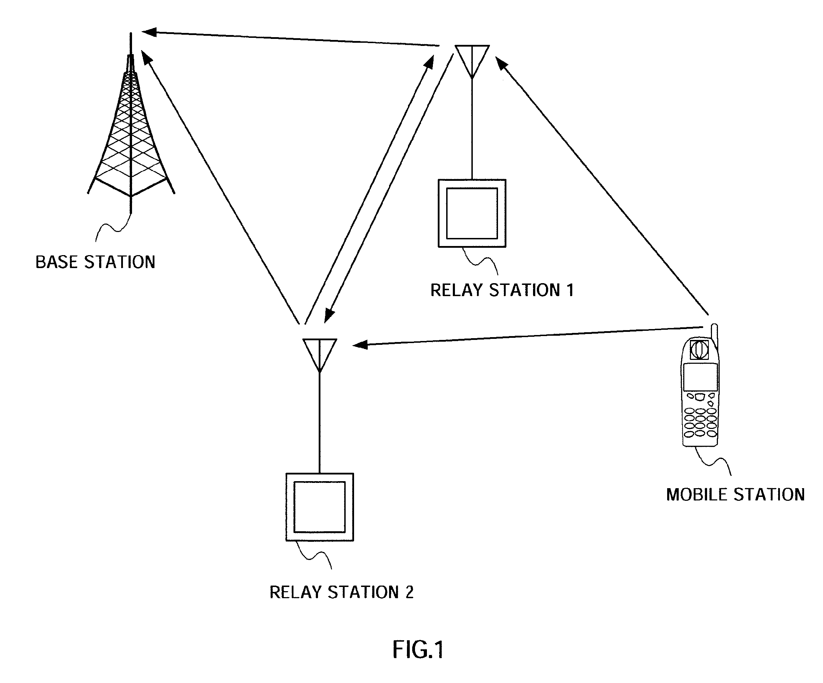

The mobile communication system according to the following embodiments comprises, as shown in FIG.1, a plurality of relay stations (relay stations 1 and 2) which relay and transmit a transmission signal from a mobile station to a base station. The mobile station, relay station and base station perform reception and transmission in synchronization with each other in frame units having a predetermined time length.

In this mobile communication system, relay station 1 and relay station 2 delay a signal received from the mobile station and transmit this signal to the base station, in a relay process. This delay control will be described in detail in each embodiment. Also, the base station receives either one of or both of a signal relayed by relay station 1 and a signal relayed by relay station 2. If both signals are received, the base station combines the two signals. Also, the signal transmitted from relay station 1 arrives at relay station 2, as well, and, similarly, the signal transmitted from relay station 2 arrives at relay station 1, as well. Accordingly, it is possible to detect, at relay station 1, whether relay station 2 transmitted the relay signal, and, similarly, it is possible to detect, at relay station 2, whether relay station 1 transmitted the relay signal.

The relay stations according to the following embodiments may be set up in advance, or another mobile station may be used as a relay station, as in an ad-hoc network (see Japanese Patent Application Laid-Open No.2001-189971, for instance).

(Embodiment 1)

First, the operation of a mobile communication system according to the present embodiment will be described.
In the present embodiment, relay station 1 and relay station 2 decide the amount of delay for a relay signal, based on channel quality between each relay station and the base station. Here, for instance, the received quality of the signal transmitted from a relay station, at the base station, is employed as channel quality. The base station measures the received quality of the signal from each relay station and reports the channel quality between the relay stations and the base station to each relay station, by transmitting channel quality information indicating the received quality, to each relay station. If the mobile communication system according to the present embodiment is a TDD (Time Division Duplex)-type communication system, the correlation between uplink channel characteristics and downlink channel characteristics is extremely high, which enables each relay station to estimate the received quality to be measured at the base station, from the received quality of the signal from the base station. Thus, in case of a TDD-type communication system, each relay station may measure channel quality, without the need for the base station to report such channel quality. Also, relay station 1 and relay station 2 receive the same signal from the mobile station, at the same time.

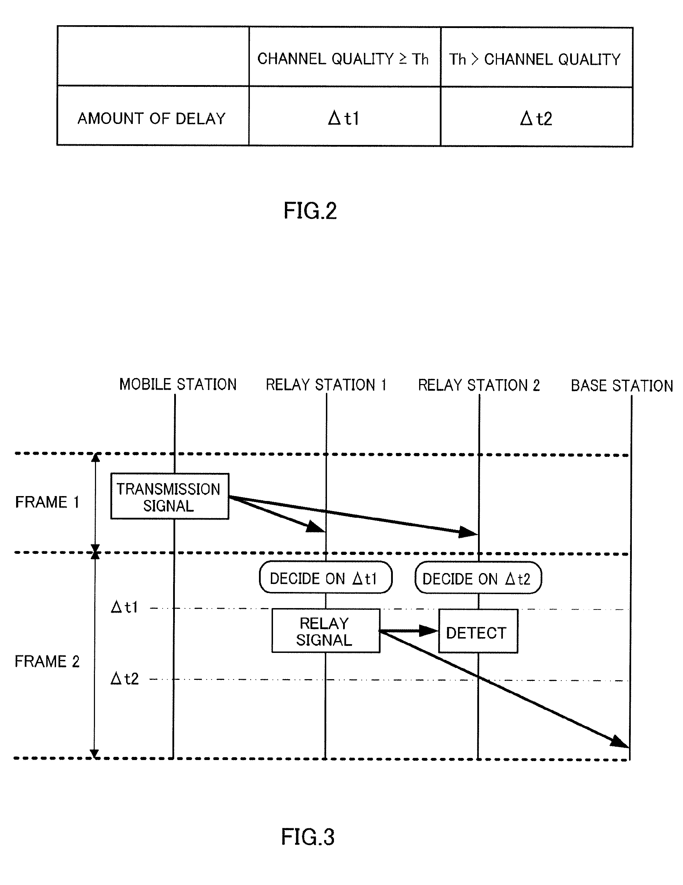

The decision on the amount of delay at each relay station is made using the table shown in FIG.2, as will be described in the following text. In the present embodiment, relay station 1 and relay station 2 are provided with the same table, as shown in FIG.2.

With reference to the table in FIG.2, each relay station compares the channel quality with a threshold value (Th), and, if the channel quality is equal to or above Th, decides the amount of delay for the relay signal to be $\Delta t1$. On the other hand, if the channel quality is below Th, the relay station decides the amount of delay for the relay signal to be $\Delta t2$. Here, $\Delta t1 < \Delta t2$, and Th is set to be the target quality of the relay signal at the base station. In other words, each relay station increases the amount of delay if channel quality is low and decreases the amount of delay if channel quality is high. Accordingly, if one of the channel quality of relay station 1 and the channel quality of relay station 2 is equal to or above Th and the other one is below Th, the amount of delay used at relay station 1 differs from the amount of delay used at relay station 2. Then, each relay station delays the signal received from the mobile station by the determined amount of delay, and relays and transmits the resulting signal.

Also, if the amount of delay is $\Delta t2$, each relay station determines whether the other relay station transmits the relay signal with an amount of delay $\Delta t1$. Then, if each relay station detects, by $\Delta t2$, that the other relay station performs relay-transmission to the base station (relay transmission with amount of delay $\Delta t1$), determines that relay-transmission from the relay station itself is unnecessary, and does not transmit the relay signal to the base station. This transmission canceling process becomes possible owing to the fact that the respective amounts of delay to be used at the relay stations differ from each other, in accordance with channel quality. On the other hand, if each relay station does not detect, during $\Delta t2$, that the other relay station performs relay-transmission to the base station, each relay station transmits the relay signal with amount of delay $\Delta t2$. Thus, if the channel quality of both relay station 1 and relay station 2 is below Th, a relay signal is transmitted from both relay stations with the same amount of delay $\Delta t2$. In this case, the base station receives and combines the relay signals from relay station 1 and relay station 2.

As described above, if different amounts of delay are applied to individual relay stations according to channel quality, it is possible to select the channel having the highest channel quality amongst the channels that connect the relay stations and the base station, without the need for centralized control at the base station. Thus, by autonomous, decentralized control at each relay station, it is possible to select an optimal relay station to perform relay, and preferentially relay a relay signal having high received quality at the base station.

Also, each relay station performs selection of the relay station in an autonomous decentralized manner, and signaling to report the selection results from the base station to each relay station is no longer necessary, so that it is possible to prevent a deterioration in throughput and suppress an increase in the processing amount at the base station resulting from an increase in the number of relay stations. Further, the signaling for reporting channel quality between the mobile station and each relay station is unnecessary, so that it is possible to prevent a deterioration in throughput.

Also, if the channel quality of relay station 1 and the channel quality of relay station 2 are both low and below Th, and the target quality at the base station cannot be satisfied by a relay signal from one of the above relay stations, relay signals from a plurality of relay stations are transmitted at the same time, and the base station combines these relay signals, thereby obtaining a diversity effect and improving received quality.

Next, FIG.3 shows a sequence diagram illustrating a case where the channel quality between relay station 1 and the base station is equal to or above Th while the channel quality between relay station 2 and the base station is below Th, that is, a case where the channel quality of relay station 1 is higher than the channel quality of relay station 2 and the relay signal from relay station 1 is transmitted preferentially. Here, the frame timing at which the relay signal is received or transmitted is determined by the base station, mobile station or a upper control station, and is reported in advance to the relay station.

In frame 1, the mobile station transmits the relay signal for the base station, to relay station 1 and relay station 2.

In frame 2, since the channel quality of relay station 1 is equal to or above Th, relay station 1 decides the amount of delay to be $\Delta t1$. Also, since the channel quality of relay station 2 is below Th, relay station 2 decides the amount of delay to be $\Delta t2$. Then, relay station 1 transmits the relay signal to the base station, with amount of delay $\Delta t1$ of frame 2. On the other hand, relay station 2 detects, by $\Delta t2$, that relay station 1 transmitted the relay signal with amount of delay $\Delta t1$, and cancels transmitting the relay signal. Thus, the base station receives only the relay signal from relay station 1, which has better channel quality. Also, since the channel quality of relay station 1 is equal to or above Th, the received quality at the base station satisfies the target quality, by means of this relay signal alone.

Thus, if the channel quality of relay station 1 is higher than the channel quality of relay station 2, the relay signal from relay station 1 can be transmitted preferentially.

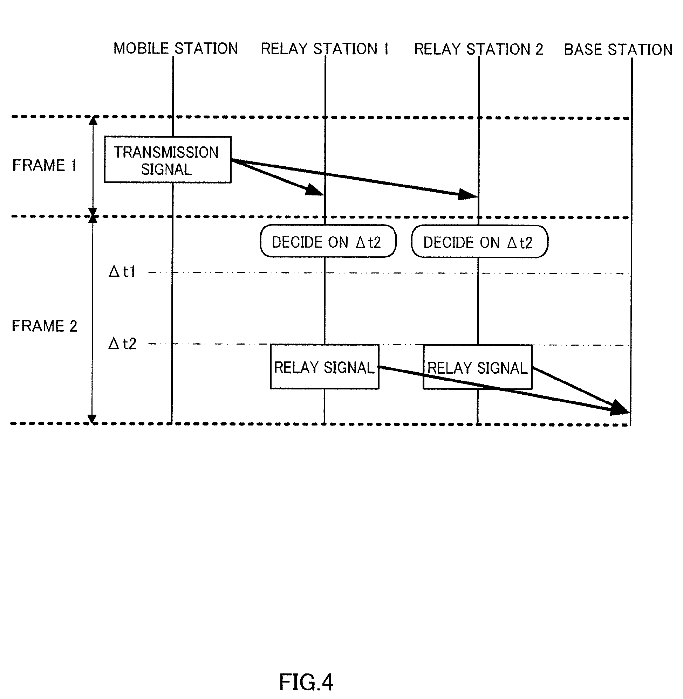

Next, FIG. 4 shows a sequence diagram illustrating a case where the channel quality between relay station 1 and the base station, and the channel quality between relay station 2 and the base station are both below Th, in other words, the case where the channel quality of relay station 1 and the channel quality of relay station 2 are both below a target quality, and the relay signal from relay station 1 and the relay signal from relay station 2 are transmitted at the same time.

In frame 1, the mobile station transmits the transmission signal for the base station, to relay station 1 and relay station 2.

In frame 2, since the channel quality of relay station 1 is below Th, relay station 1 decides the amount of delay to be $\Delta t2$. Also, since the channel quality of relay station 2 is below Th as well, relay station 2 decides, similar to relay station 1, the amount of delay to be $\Delta t2$. Thus, relay station 1 does not detect, during the period from the head of frame 2 until $\Delta t2$ has passed, that relay station 2 performed relay-transmission. Similarly, relay station 2 does not detect, during the period from the head of frame 2 until $\Delta t2$ has passed, that relay station 1 performed relay-transmission. Thus, both relay station 1 and relay station 2 at the same time transmit a relay signal to the base station with $\Delta t2$ of frame 2, and the base station receives the relay signal from relay station 1 and the relay signal from relay station 2 at the same time.

In this way, if the channel quality of relay station 1 and the channel quality of relay station 2 are both low, and the target quality at the base station cannot be satisfied by the relay signal from only one of the above relay station 1 or relay station 2, a relay signal is transmitted from both relay stations, and the base station combines these relay signals, thereby making it possible to improve received quality.

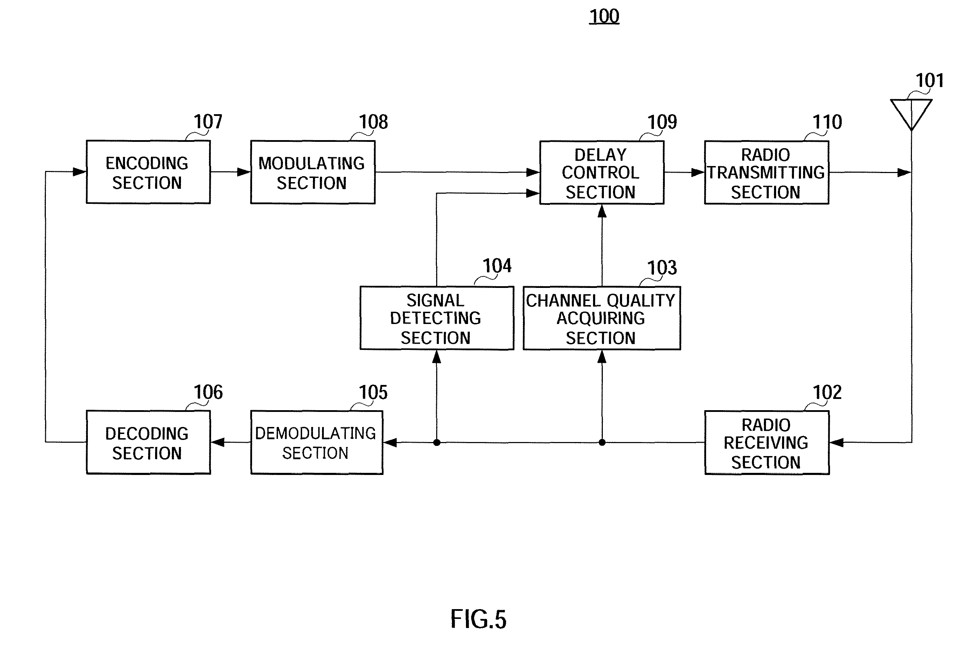

Next, the configuration of a relay station according to the present embodiment will be described. The configuration of relay station 100 according to the present embodiment is shown in FIG.5. The above-mentioned relay station 1 and relay station 2 have the same configuration. Also, the following description is restricted to relay transmission in the uplink. However, relay-transmission in the downlink can be performed in a way similar to the transmission in the uplink.

In relay station 100, radio receiving section 102 receives a signal from the mobile station, channel quality information from the base station and a relay signal transmitted by the other relay station, via antenna 101, performs radio processing such as down-conversion or the like, on these signals, and outputs the result.

Channel quality acquiring section 103 acquires the channel quality between relay station 100 and the base station, from the channel quality information from the base station. If a TDD-type communication system is used, channel quality acquiring section 103 measures the received quality of the signal from the base station to acquire channel quality. The acquired channel quality is inputted to delay control section 109.

Signal detecting section 104 compares the signal from the mobile station to the relay signal from the other relay station to determine whether the other relay station has already performed relay-transmission. In other words, if the signal from the mobile station is the same as the relay signal from the other relay station, signal detecting section 104 determines that the same relay signal has already been transmitted from the other relay station to the base station, and detects that the other relay station has already performed relay-transmission. If the result of the detection is affirmative, the information on this detection is inputted to delay control section 109.

The signal from the mobile station which is outputted from radio receiving section 102 is demodulated at demodulating section 105, and after being decoded at decoding section 106, the signal is re-encoded at encoding section 107, then re-modulated at modulating section 108, thereby providing a relay signal. The modulated relay signal is inputted to delay control section 109.

Delay control section 109 is provided with a table (FIG.2) which shows the correspondences between channel quality and the amount of delay (delay time), and decides the amount of delay in accordance with channel quality, with reference to this table, as will be described in the following text.

Then, if signal detecting section 104 does not detect, during the period from the head of the frame of the relay signal until the delay time has passed, that the other relay station has performed relay-transmission to the base station, delay control section 109 delays the relay signal by the decided amount of delay, and outputs the delayed relay signal to radio transmitting section 110. Thus, in this case, radio transmitting section 110 performs radio processing such as up-conversion on the relay signal and transmits the relay signal to the base station, from antenna 101, at a timing after the delay time has passed.

On the other hand, if signal detecting section 104 detects, during the period from the head of the frame of the relay signal until the delay time has passed, that the other relay station has performed relay-transmission to the base station, delay control section 109 does not output the relay signal to radio transmitting section 110. Thus, in this case, radio transmitting section 110 does not transmit the relay signal to the base station.

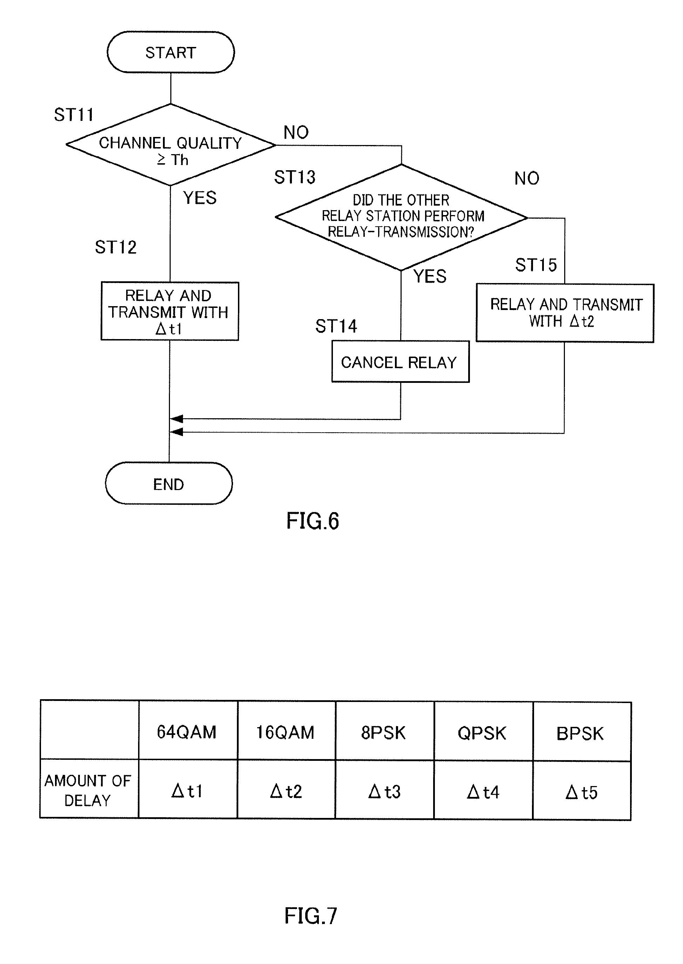

Next, the operation flow for the delay control at relay station 100 will be described using the flow chart of FIG.6.

In ST (step) 11, channel quality is compared to Th.

If the channel quality is equal to or above Th in ST11 ("YES" in ST11), in ST12, relay-transmission is carried out with amount of delay $\Delta t1$ decided in accordance with the settings in the table shown in FIG.2.

On the other hand, if channel quality is below Th in ST11 ("NO" in ST11), in ST13, it is determined whether the other relay station performed relay-transmission.

If it is determined that the other relay station performed relay-transmission in ST13 ("YES" in ST13), in ST14, relay transmission is cancelled.

On the other hand, if it is determined that the other relay station did not perform relay-transmission in ST13 ("NO" in ST13), in ST15, relay-transmission is carried out with amount of delay $\Delta t2$ decided in accordance with the settings in the table shown in FIG.2.

In this way, since in the present embodiment relay is performed with a small amount of delay if the channel quality between the relay stations and the base station is high, and a large amount of delay if the above-mentioned channel quality is low, if channel quality varies between a plurality of relay stations, one relay station with the highest channel quality is selected, which makes it possible to preferentially transmit the relay signal of the relay station with higher channel quality. Also, since a plurality of relay stations transmit relay signals at the same time if the channel quality of all the relay stations is low, a diversity effect can be obtained at the base station, thereby improving received quality.

If the multiplexing scheme of the signal is OFDM (Orthogonal Frequency Division Multiplexing), preferably, the difference in the amount of delay ($\Delta t2 - \Delta t1$) is set within a guard interval.

(Embodiment 2)

The present embodiment differs from embodiment 1 in that the amount of delay is decided in accordance with the MCS (Modulation and Coding Scheme (encoding rate)) level of the relay transmission. The following description will be focused on differences between the present embodiment and embodiment 1.

With respect to the MCS level used to decide the amount of delay, the base station measures the received quality of the signal from each relay station, and reports an MCS level in accordance with this received quality, to each relay station. Also, with a TDD-type communication system, each relay station may measure the received quality of the signal from the base station and employ the MCS level determined in accordance with this received quality.

First, the operation of a mobile communication system according to the present embodiment will be described. In the present embodiment, the decision on the amount of delay at each relay station is made using the table shown in FIG.7, as will be described in the followingtext. In the present embodiment, relay station 1 and relay station 2 are provided with the same table as shown in FIG.7.

Each relay station decides an amount of delay in accordance with the MCS level, with reference to the table of FIG.7. More specifically, if the modulation scheme with that MCS level is 64QAM, each relay station decides the amount of delay for the relay signal to be $\Delta t1$. The amounts of delay ($\Delta t2$, $\Delta t3$, $\Delta t4$, $\Delta t5$) are decided in a similar way for the other modulation schemes (16QAM, 8PSK, QPSK, BPSK). Here, the amounts of delay in the table shown in FIG.7 are $\Delta t1 < \Delta t2 < \Delta t3 < \Delta t4 < \Delta t5$. In other words, each relay station increases the amount of delay when the MCS level is low (i.e. small M-ary modulation value), and decreases the amount of delay when the MCS level is high (i.e. large M-ary modulation value). Then, each relay station delays the signal received from the mobile station, by the decided amount of delay, and relays and transmits the resulting signal. To simplify the description, the table in FIG.7 omits the encoding scheme (encoding rate) and shows only the modulation scheme as the MCS.

Also, each relay station determines whether the other station transmits the relay signal with a smaller amount of delay than the amount of delay at that relay station. If each relay station detects, by a delay time at that relay station, that the other relay station performed relay-transmission to the base station, the relay station determines that relay transmission from the relay station itself is unnecessary, and does not transmit the relay signal to the base station. This transmission canceling process becomes possible owing to the fact that the amounts of delay used by the relay stations differ from one another depending on the MCS level. On the other hand, if each relay station does not detect, during the delay time at that relay station, that the other relay station has performed relay-transmission to the base station, the relay station transmits the relay signal with the amount of delay at that relay station. Thus, only the relay station with the smallest amount of delay amongst a plurality of relay stations performs relay-transmission.

In this way, if different amounts of delay are applied to individual relay stations depending on MCS levels, it is possible to select the relay station with the highest MCS level (largest M-ary modulation value) without the need of a centralized control at the base station, and improve transmission rate. In other words, relay by an optimal relay station can be preferentially carried out under autonomous decentralized control at each relay station, thereby improving throughput.

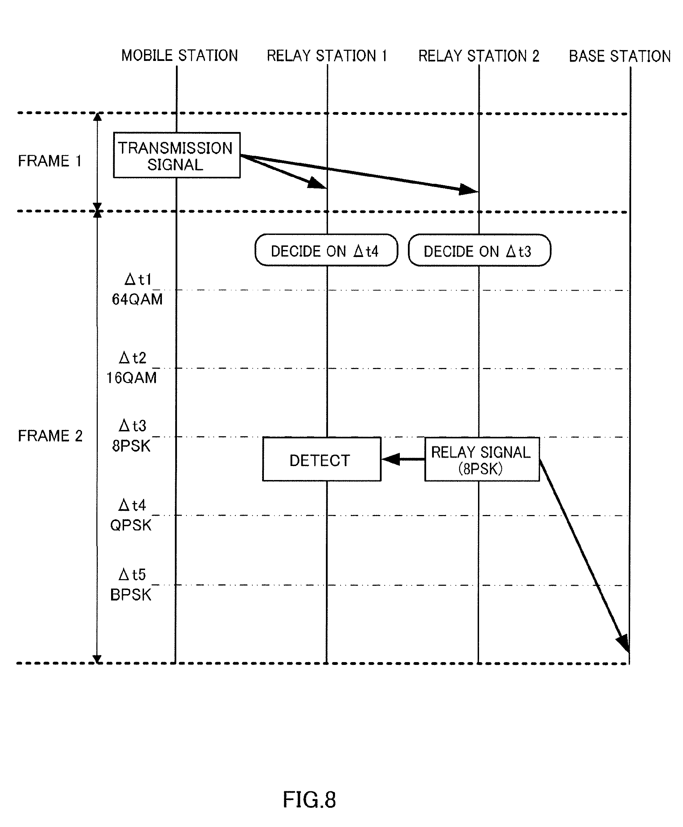

Next, FIG.8 shows a sequence diagram of a case where the modulation scheme of the relay signal transmitted from relay station 1 is QPSK, and the modulation scheme of the relay signal transmitted from relay station 2 is 8PSK, e.g., the MCS level of relay station 2 is higher than the MCS level of relay station 1, and the relay signal from relay station 2 is transmitted preferentially.

In frame 1, the mobile station transmits a transmission signal for the base station, to relay station 1 and relay station 2.

In frame 2, since the modulation scheme of the relay signal at relay station 1 is QPSK, relay station 1 decides the amount of delay to be $\Delta t4$. Also, since the modulation scheme of the relay signal at relay station 2 is 8PSK, relay station 2 decides the amount of delay to be $\Delta t3$. Then, relay station 2 transmits the relay signal to the base station, with amount of delay $\Delta t3$ of frame 2. On the other hand, relay station 1 detects, by $\Delta t4$, that relay station 2 transmitted the relay signal with amount of delay $\Delta t3$, and cancels transmitting the relay signal. Accordingly, the base station receives the relay signal from relay station 2 which has a higher transmission rate.

In this way, if the MCS level of relay station 2 is higher than the MCS level of relay station 1, the relay signal from relay station 2 can be transmitted preferentially.

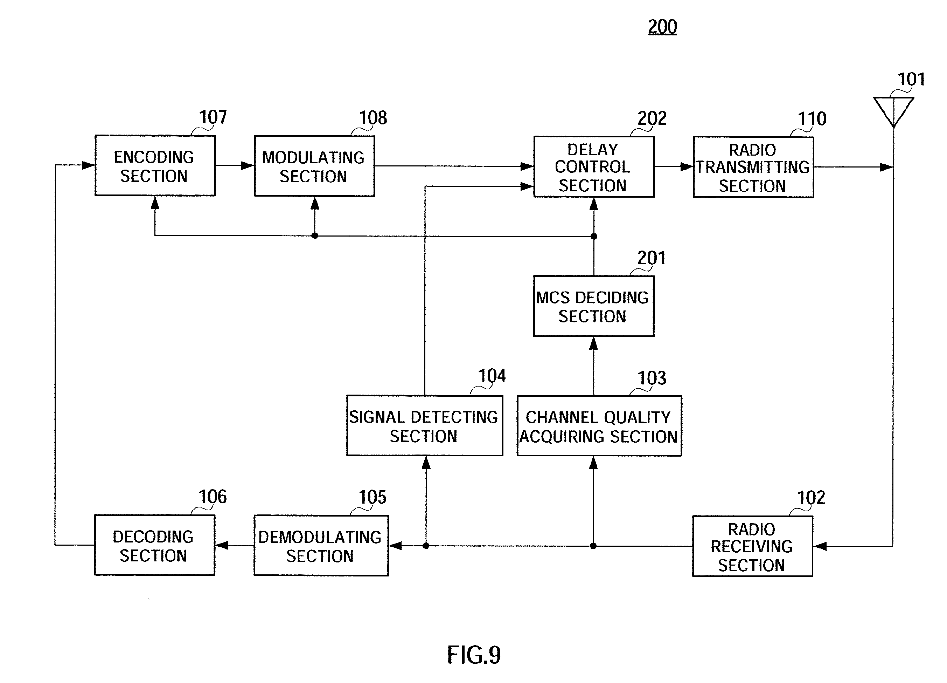

Next, the configuration of the relay station according to the present embodiment will be described. The configuration of relay station 200 according to the present embodiment is shown in FIG. 9. Components of FIG. 9 which are the same as those in embodiment 1 (FIG.5) are designated by the same numeric symbols, and further description thereof will be hereby omitted.

The channel quality acquired by channel quality acquiring section 103 is inputted to MCS deciding section 201.

MCS deciding section 201 decides the MCS level of the relay signal in accordance with channel quality, and inputs the result to encoding section 107, modulating section 108 and delay control section 202.

The signal from the mobile station outputted from radio receiving section 102 is demodulated at demodulating section 105, and, after being decoded at decoding section 106, it is re-encoded at encoding section 107, in accordance with the MCS level instructed from MCS deciding section 201, and then re-modulated at modulating section 108, thereby providing a relay signal. The modulated relay signal is inputted to delay control section 202.

Delay control section 202 is provided with a table (FIG.7) showing the correspondences between the MCS level and the amount of delay (delay time), and decides the amount of delay in accordance with the MCS level, with reference to this table, as will be described in the following text.

Then, if signal detecting section 104 does not detect, during the period from the head of the frame of the relay signal until a delay time has passed, that the other relay station has performed relay transmission to the base station, delay control section 202 delays the relay signal by the decided relay amount, and outputs the delayed relay signal to radio transmitting section 110. Accordingly, in this case, radio transmitting section 110 performs radio processing such as up-conversion and the like, on the relay signal, and transmits the resulting relay signal from antenna 101 to the base station, at a timing after the delay time has passed.

On the other hand, if signal detecting section 104 detects, during the period from the head of the frame of the relay signal until a delay time has passed, that the other relay station has performed relay transmission to the base station, delay control section 202 does not output the relay signal to radio transmitting section 110. Accordingly, in this case, radio transmitting section 110 does not transmit the relay signal to the base station.

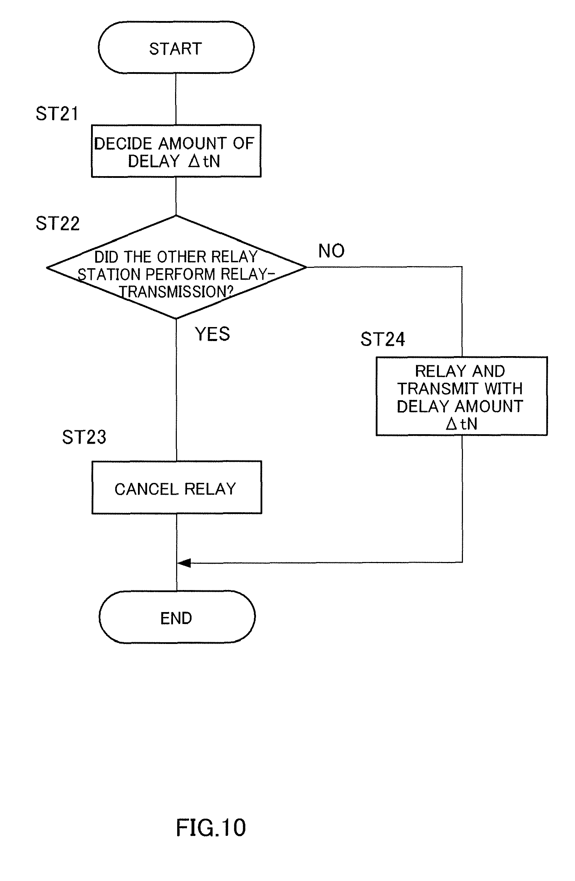

Next, the operation flow for the delay control at relay station 200 will be described using the flow chart of FIG.10.

In ST21, an amount of delay $\Delta tN$ in accordance with the MCS level is decided in accordance with the settings in the table shown in FIG.7.

In ST22, it is determined whether the other relay station performed relay transmission.

If it is determined in ST22 that the other relay station performed relay transmission ("YES" in ST22), the relay-transmission is cancelled in ST23.

On the other hand, if it is determined in ST22 that there are no other relay stations performing relay transmission ("NO" in ST22), relay transmission is performed with amount of delay $\Delta tN$ in ST24.

In this way, according to the present embodiment, the amount of delay is decided in accordance with the MCS level and relay is carried out with a small amount of delay at a high MCS level and a large amount of delay at a low MCS level, so that, if there are differences in the MCS levels between a plurality of relay stations, it is possible to preferentially transmit the relay signal of a relay station with a higher MCS level. Also, different amounts of delay are set differ for different MCS levels, so that the amount of delay can be set in multi-stages, which enables a more detailed control of the amount of delay.

The MCS level may be specified by the mobile station, a upper control station, or other relay stations.

(Embodiment 3)

The present embodiment differs from embodiment 1 in that different amounts of delay are set for individual relay stations in accordance with the priority of each relay station. The following description will be focused on the differences between the present embodiment and embodiment 1.

The priority at the relay station is decided, for instance, in accordance with the amount of residual energy in the relay station, the number of mobile stations relayed by the relay station, an average channel quality between the relay station and the base station, distance between the relay station and the base station, the reliability of the relay station, the location of relay station, and so on. In other words, the priority is set to high and the amount of delay is set to small, particularly for relay stations with a large amount of residual energy, relay stations that relay a large number of mobile stations, relay stations with a high average channel quality, relay stations at a short distance from the base station, and relay stations with high reliability.

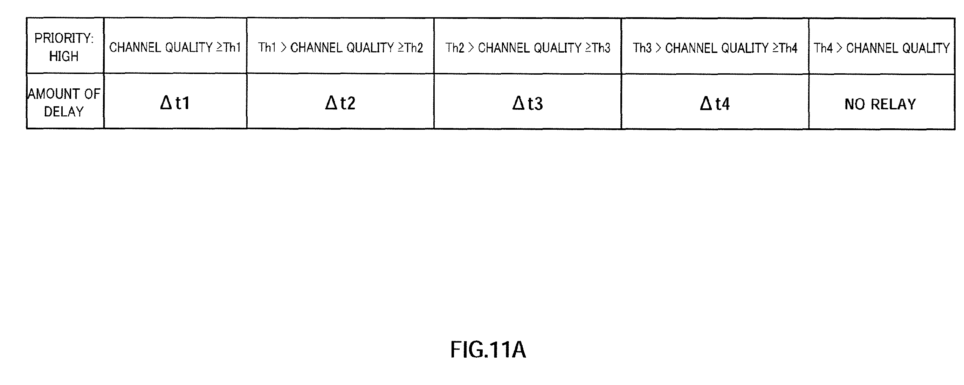

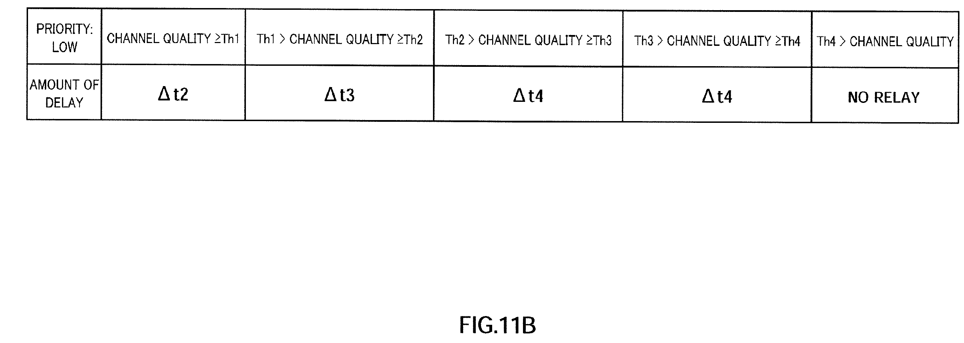

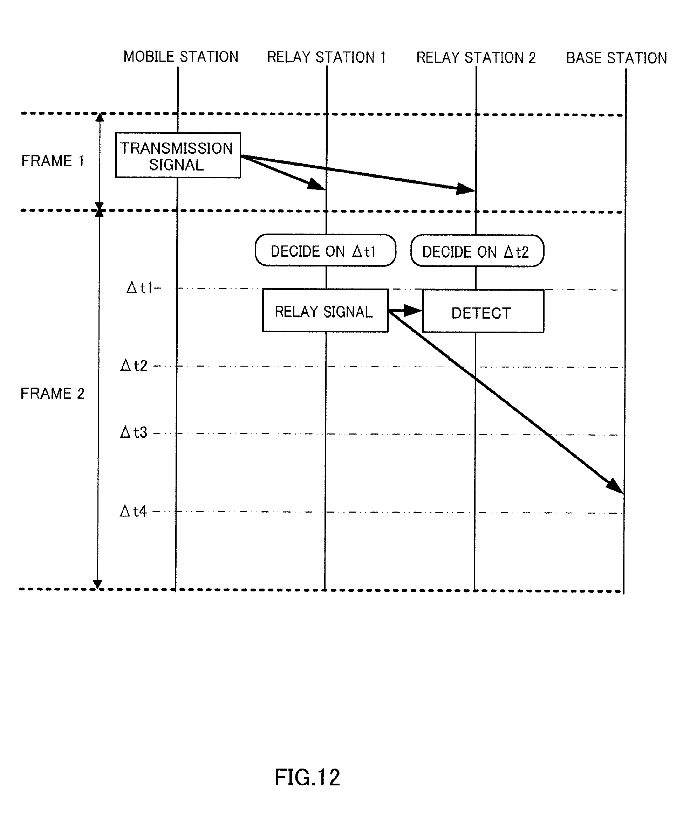

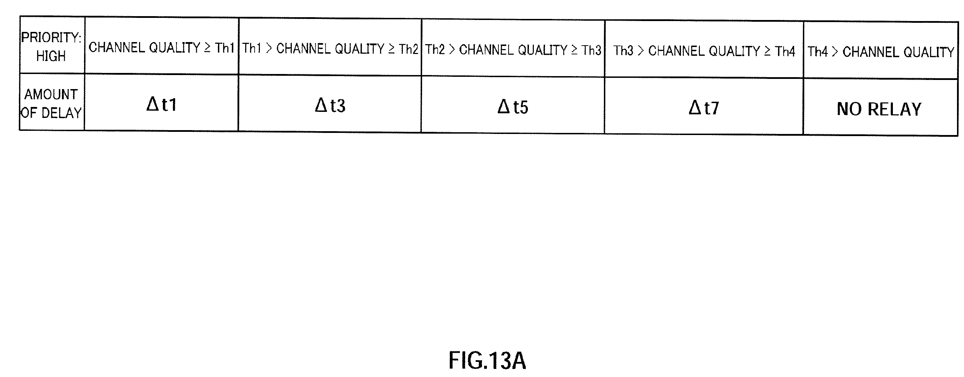

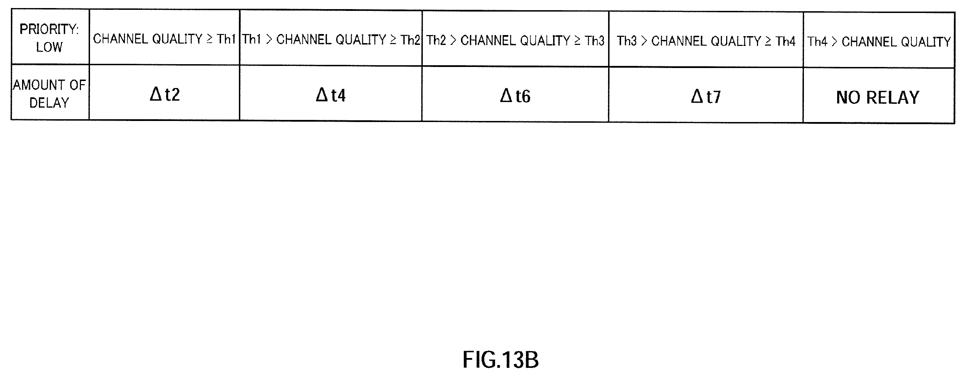

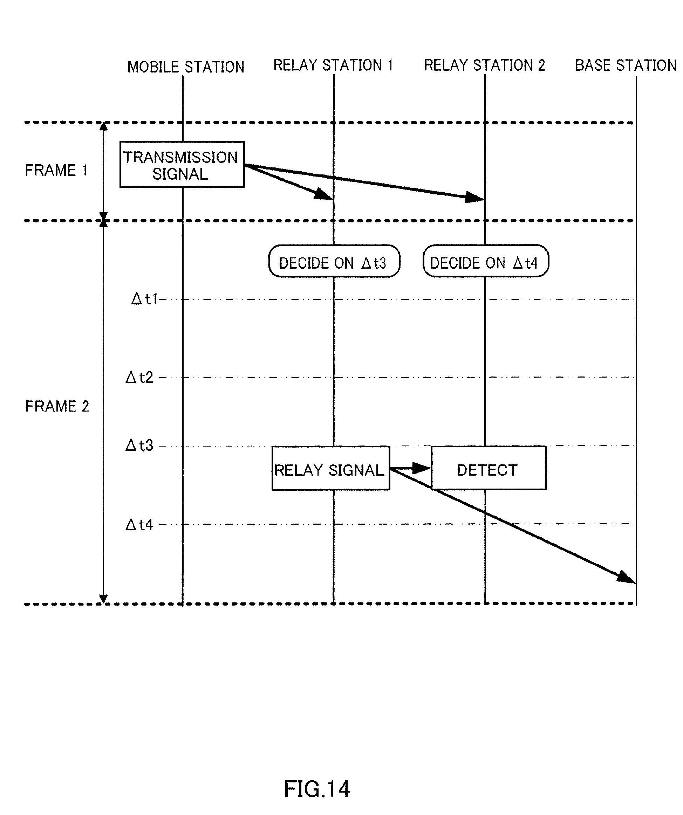

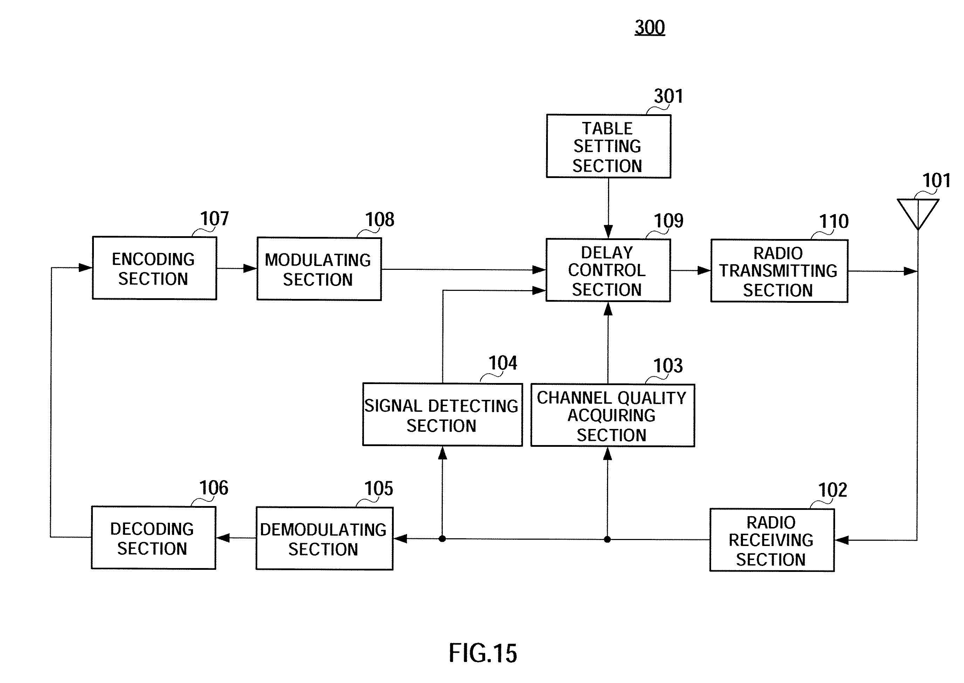

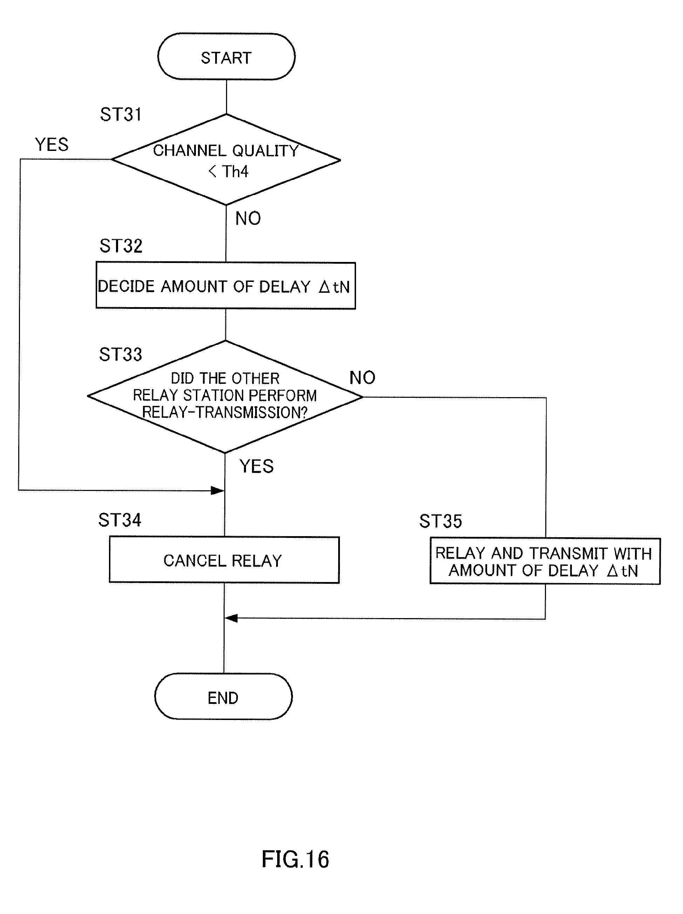

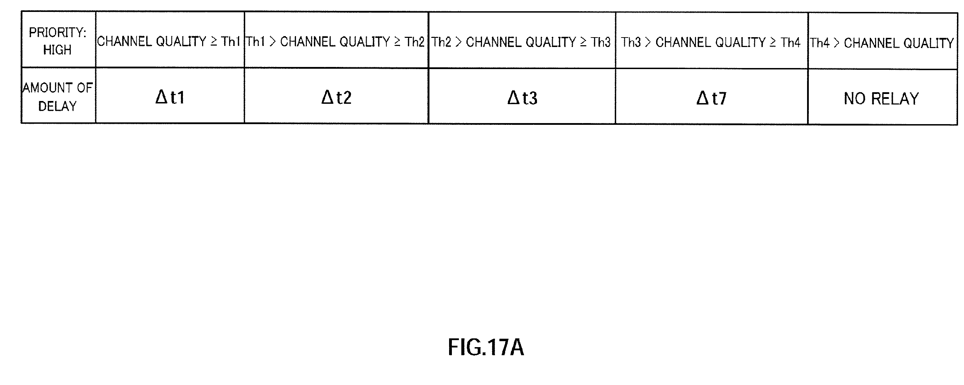

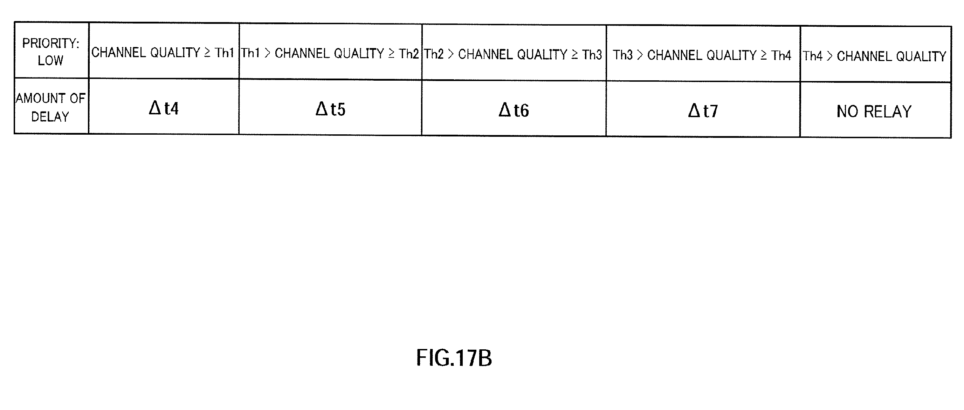

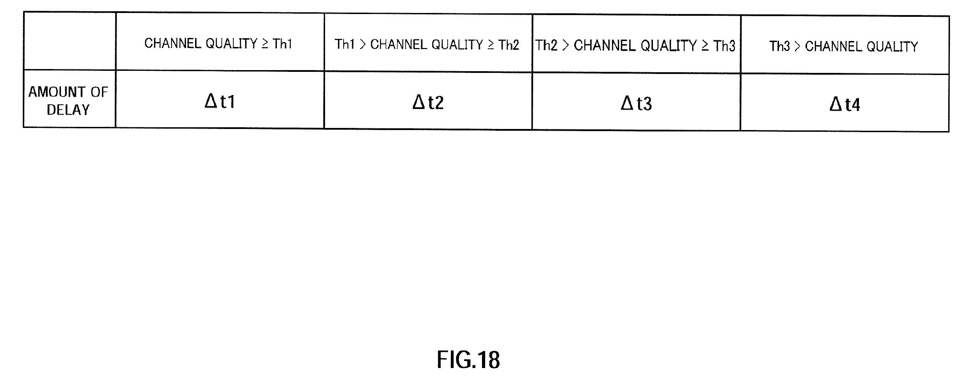

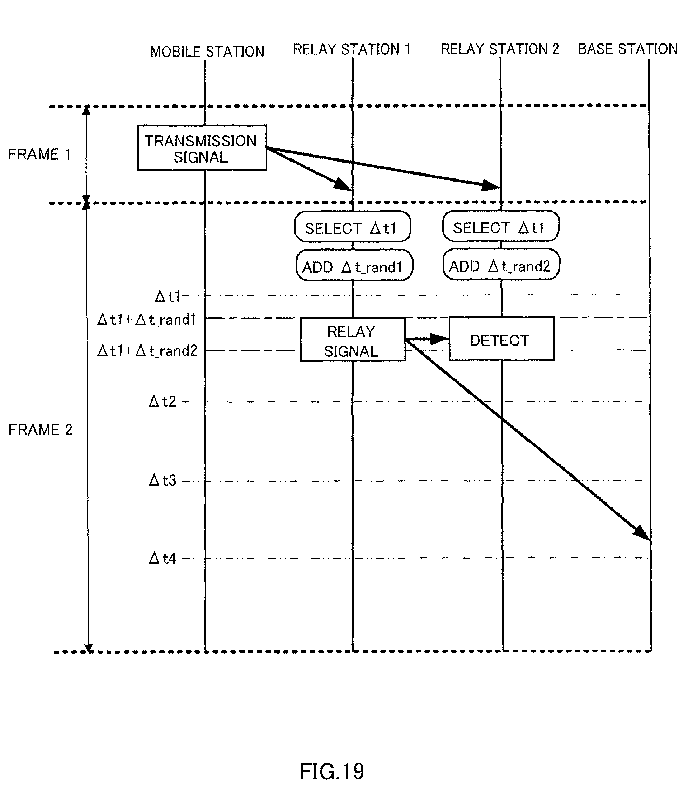

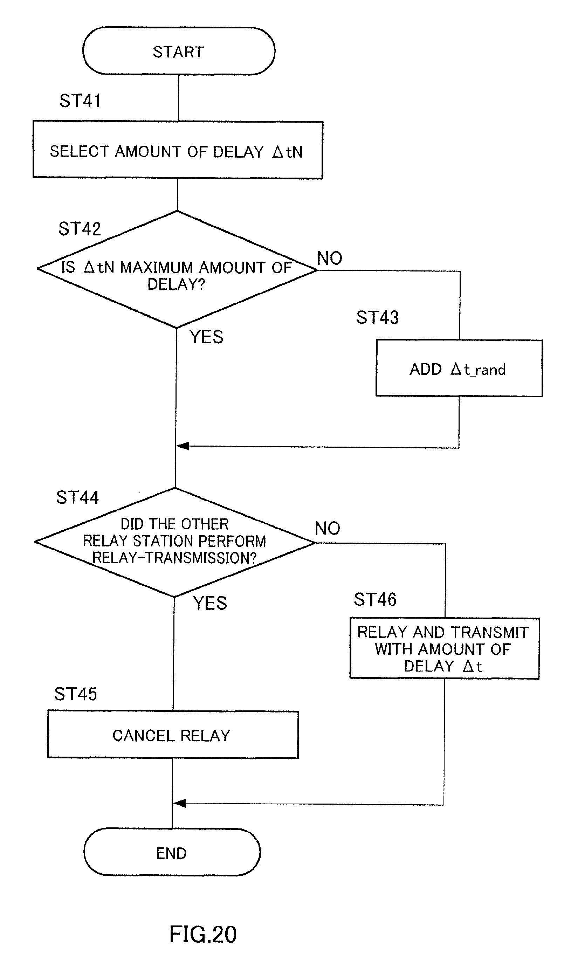

First, the operation of the mobile communication system according to the present embodiment will be described. In the present embodiment, the decision on the amount of delay at each relay station is made using the tables <table example 1> shown in FIGS . 11A and B or tables <table example 2> shown in FIGS . 13A and B, as will be described in the following text. In the present embodiment, it is assumed that the priority of relay station 1 is high and the priority of relay station 2 is low.

<Table example 1> In the tables in FIGS.11A and B, the threshold values are Th1 > Th2 > Th3 > Th4, while the amounts of delay are $\Delta t1 < \Delta t2 < \Delta t3 < \Delta t4$. If the tables of FIGS.11A and B are compared, it is noted that for the same channel quality, the amount of delay is set to be small for high priority and large for low priority. For instance, if channel quality $\geq$ Th1, in the table of FIG. 11A, the amount of delay is set to $\Delta t1$, whereas in the table of FIG.11B, the amount of delay is set to $\Delta t2$. This also holds true for cases where Th1 > channel quality $\geq$ Th2, and Th2 > channel quality $\geq$ Th3. Thus, the amount of delay is set to be smaller, the higher the priority, and larger, the lower the priority. Accordingly, the table shown in FIG. 11A is set for relay station 1 which has a high priority, whereas the table shown in FIG.11B is set for relay station 2 which has a low priority.

Also, if Th3 > channel quality $\geq$ Th4, the same amount of delay $\Delta t4$ is set in both tables. Thus, in this case, the relay signal from relay station 1 and the relay signal from relay station 2 are transmitted at the same time, and the base station combines these relay signals.

Also, if Th4 > channel quality, the settings in both tables show that relay-transmission is not carried out. Since Th4 is set to an extremely low quality, for instance to a noise level, if Th4 > channel quality, the channel quality is extremely poor, and since the probability that a transmitted relay signal is received at the base station is extremely low, it is decided that relay-transmission is not performed in the first place.

In this way, if the tables in FIGS.11A and B are compared, it is noted that if channel quality $\geq$ Th3, the amounts of delay are set to differ fromone another, whereas if Th3 > channel quality, the amounts of delay are set to be the same. In other words, if channel quality $\geq$ Th3, different amounts of delay are used in accordance with thepriorityat the relay station, whereas, if Th3 > channel quality, the same amount of delay is used, irrespective of the priority at the relay station.

Next, FIG.12 shows a sequence diagram illustrating a case where, in table example 1, the channel quality between relay station 1 (priority: high) and the base station and the channel quality between relay station 2 (priority: low) and the base station are both equal to or above Th1.

In frame 1, the mobile station transmits the relay signal for the base station, to relay station 1 and relay station 2.

In frame 2, since at relay station 1 the channel quality $\geq$ Th1, relay station 1 decides the amount of delay to be $\Delta t1$, with reference to the table of FIG.11A. Also, since at relay station 2 the channel quality $\geq$ Th1, relay station 2 decides the delay time to be $\Delta t2$, with reference to the table of FIG.11B. Then, relay station 1 transmits the relay signal to the base station with amount of delay $\Delta t1$ of frame 2. On the other hand, relay station 2 detects, by $\Delta t2$, that relay station 1 transmitted the relay signal with amount of delay $\Delta t1$, and thus cancels transmitting the relay signal. Accordingly, the base station receives only the relay signal from relay station 1, which has a higher priority.

<Table example 2>

In the tables in FIGS.13A and B, the threshold values are Th1 > Th2 > Th3 > Th4, while the amounts of delay are $\Delta t1 < \Delta t2 < \Delta t3 < \Delta t4 < \Delta t5 < \Delta t6 < \Delta t7$. If the tables of FIGS.13A and B are compared, it is noted that these tables are similar to those of table example 1, in the sense that for the same channel quality, the amount of delay is set to be small for a high priority, and large for a low priority. However, table example 2 differs from table example 1 in the sense that although the amounts of delay if the channel quality is equal to or higher than Th3, are the same in table example 1 (for instance, the amount of delay if that Th1 > channel quality $\geq$ Th2 in FIG. 11A and the amount of delay if that channel quality $\geq$ Th1 in FIG.11B are both $\Delta t2$), whereas table example 2 does not contain amounts of delay which are the same.

Thus, the reason why the same amounts of delay are not set for amounts of delay if the channel quality is equal to or above Th3 in table example 2, is that since Th3 is set to a target quality of the relay signal at the base station, the target quality at the base station can be satisfied by a relay signal from one relay station only, if the channel quality is equal to or above Th3. By setting the table as described in the above, if channel quality is equal to or above the target quality at a plurality of relay stations, relay signals are transmitted only from one relay station, thus eliminating unnecessaryrelay-transmissions, whichmakes it possible to reduce the power consumption at the relay stations.

Next, FIG.14 shows a sequence diagram illustrating a case where, in table example 2, the channel quality between relay station 1 (priority: high) and the base station and the channel quality between relay station 2 (priority: low) and the base station are both Th1 > channel quality $\geq$ Th2.

In frame 1, the mobile station transmits the transmission signal for the base station, to relay station 1 and relay station 2.

In frame 2, since Th1 > channel quality ≥ Th2, relay station 1 decides the amount of delay to be Δt3, with reference to the table of FIG.13A. Also, since Th1 > channel quality ≥ Th2, relay station 2 decides the delay time to be Δt4, with reference to the table of FIG.13B. Then, relay station 1 transmits the relay signal to the base station with amount of delay Δt3 of frame 2. On the other hand, relay station 2 detects, by Δt4, that relay station 1 transmitted the relay signal with amount of delay Δt3, and cancels transmitting the relay signal. Accordingly, the base station receives only the relay signal from relay station 1, which has a higher priority.

Next, the configuration of the relay station according to the present embodiment will be described. The configuration of relay station 300 according to the present embodiment is shown in FIG.15. Components in FIG.15 that are the same as those of embodiment 1 (FIG.5) are designated by the same numeric symbols, and further description thereof will be hereby omitted.

Table setting section 301 sets the table provided in delay control section 109, in accordance to the priority at each relay station. The settings in this table may be carried out in accordance with instructions from the base station, mobile station or a upper control station, by exchanging information between the relay stations, or separately by each relay station. Also, the table may be updated in accordance with changes of priority. The table may be updated for each communication, at regular time intervals, or accordingly during transmission.

Next, the operation flow for delay control of relay station 300 will be described using the flow chart of FIG.16.

In ST31, it is determined whether channel quality < Th4, in accordance with the tables of FIGS.11A and B, or FIGS.13A and B.

If it is determined in ST31 that channel quality < Th4 ("YES" in ST31), relay transmission is cancelled in ST34.

If it is determined in ST31 that channel quality is not below (<) Th4 ("NO" in ST31), an amount of delay ΔtN that is in accordance with channel quality is decided, in ST32, in accordance with the tables of FIGS.11A and B, or FIGS. 13A and B.

In ST33, it is determined whether the other relay station performs relay-transmission.

If it is determined in ST33 that the other relay station performed relay-transmission ("YES" in ST33), relay-transmission is cancelled in ST34.

On the other hand, if it is determined in ST33 that the other relay station did not perform relay-transmission ("NO" in ST33), relay transmission is performed with amount of delay ΔtN in ST35.

The tables shown in FIGS.17A and B may be employed as the tables in the above-mentioned table example 2. Here, the same operation and effects can be obtained by using the tables shown in FIGS.17A and B, as by using the tables shown in FIGS.13A and B.

Thus, since in the present embodiment, each relay station employs a different table, depending on the priority at that relay station, to carry out relay-transmission with an amount of delay which differs from the other amounts of delay, a relay station from which preferential relay is desired can be caused to perform relay transmission, even if the channel quality is the same at a plurality of relay stations. Also, by employing the tables of table example 2 (FIGS.13A and B, or FIGS.17A and B), it is possible toprevent unnecessary relay-transmissions such as transmission of the same relay signal from a plurality of relay stations, if the channel quality of any relay station is equal to or above the target quality at the base station.

(Embodiment 4)

The present embodiment differs from embodiment 1 in that it uses an amount of delay (second amount of delay) obtained by adding a random value to one amount of delay (first amount of delay) selected from a plurality of amounts of delay. The next description will be focused on the differences between the present embodiment and embodiment 1.

First, the operation of a mobile communication system according to the present embodiment will be described. In the present embodiment, the decision on the amount of delay at each relay station is made using the table shown in FIG.18, as will be described in the followingtext. In the present embodiment, relay station 1 and relay station 2 are provided with the same table as shown in FIG.18. Also, in the table shown in FIG.18, the threshold values are Th1 > Th2 > Th3, whereas the amounts of delay are Δt1 < Δt2 < Δt3 < Δt4.

First, each relay station selects an amount of delay (first amount of delay) in accordance with the channel quality, with reference to the table of FIG.18. More specifically, if the channel quality is equal to or above Th1, each relay station selects Δt1 as the amount of delay for the relay signal. Similarly, if Th1 > channel quality ≥ Th2, each relay station selects Δt2, if Th2 > channel quality ≥ Th3, it selects Δt3, and if Th3 > channel quality, it selects Δt4.

Next, each relay station determines an amount of delay (second amount of delay) obtained by adding a random value Δt_rand, determined based on the following equation (equation 1), to the amount of delay (first amount of delay) selected in accordance with channel quality. In equation 1, "Rand (X) " is a function for obtaining a random value in the

range X.

$$\Delta t\_rand = Rand\ (\Delta t(N + 1) - \Delta tN)\qquad \cdots(Equation\ 1)$$

Thus, if, for instance, eachrelaystationselects $\Delta t1$, it determines the amount of delay $\Delta t$ by adding a random value obtained from Rand ($\Delta t2 - \Delta t1$), to $\Delta t1$. Then, each relay station delays the signal received from the mobile station, by the delay amount $\Delta t$ determined as described in the above, and relays and transmits the resulting signal.

Also, each relay station determines whether the other relay station sends a relay signal with a smaller amount of delay than the amount of delay at that relay station. If each relay station detects, by the delay time at that relay station, that the other relay station performed relay-transmission to the base station, it determines that relay-transmission from that relay station is unnecessary, and does not transmit the relay signal to the base station. On the other hand, if it is not detected, during a delay time at that relay station, that the other relay station performed relay-transmission to the base station, each relay station transmits the relay signal with the amount of delay at that relay station. Thus, only the relay station with the smallest amount of delay from a plurality of relay stations, performs relay-transmission.

Here, since Th3 in the table shown in FIG.18 is set to the target quality of the relay signal at the base station, if channel quality is equal to or above Th3, the target quality at the base station can be satisfied by a relay signal from one relay station only, whereas, if channel quality is below Th3, the target quality at the base station cannot be satisfied by a relay signal from one relay station only. For this reason, if each relay station selects $\Delta t4$, $\Delta t4$ is assumed to be amount of delay $\Delta t$ as is, without adding $\Delta t\_rand$. Accordingly, in this case, the relay signal from relay station 1 and the relay signal from relay station 2 are transmitted at the same time, and the base station combines these relay signals and satisfies the target quality. In this way, if the amount of delay selected in accordance with channel quality corresponds to a specific amount of delay (here, $\Delta t1$, $\Delta t2$ or $\Delta t3$) from a plurality of amounts of delay, each relay station delays a received signal by a delay amount including $\Delta t\_rand$. In other words, if the amount of delay selected in accordance with channel quality is not the maximum amount of delay (here, $\Delta t4$) amongst a plurality of amounts of delay, each relay station delays the received signal by a delay amount including $\Delta t\_rand$. Thus, if the table shown in FIG.18 is used in the present embodiment, "N" in equation 1 becomes one of 1, 2, and 3.

In this way, by delaying the received signal by a delay amount obtained by adding a random value to the amount of delay selected in accordance with channel quality, the respective amounts of delay of a plurality of relay stations can be set to differ from one another, even if the channel quality is the same at the plurality of relay stations, and the amounts of delay selected by this plurality of relay stations are the same . As a result, when the received quality at the base station satisfies the target quality by using a relay signal from one relay station only, it is possible to reduce the probability of relay signals being transmitted from a plurality of relay stations, which can thus prevent unnecessary relay-transmissions.

Next, FIG.19 shows a sequence diagram illustrating a case where the channel quality between relay station 1 and the base station and the channel quality between relay station 2 and the base station are both equal to or above Th1.

In frame 1, the mobile station transmits the relay signal for the base station, to relay station 1 and relay station 2.

In frame 2, since channel quality $\geq$ Th1, relay station 1 selects amount of delay $\Delta t1$, with reference to the table of FIG.18. Then, relay station 1 determines the amount of delay by adding a random value $\Delta t\_rand1$, obtained from Rand ($\Delta t2 - \Delta t1$), to $\Delta t1$. On the other hand, since channel quality $\geq$ Th1, relay station 2 selects amount of delay $\Delta t1$, with reference to the table of FIG. 18. Then, relay station 2 determines the amount of delay by adding a random value $\Delta t\_rand2$ obtained from Rand ($\Delta t2 - \Delta t1$), to $\Delta t1$. Since "Rand(X)" is a function for obtaining a random value in range X, $\Delta t\_rand1 \neq \Delta t\_rand2$. Here, it is assumed that $\Delta t\_rand1 < \Delta t\_rand2$. Thus, $(\Delta t1 + \Delta t\_rand1) < (\Delta t1 + \Delta t\_rand2)$. Then, relay station 1 transmits the relay signal to the base station, with amount of delay $\Delta t1 + \Delta t\_rand1$ of frame 2. On the other hand, relay station 2 detects, by $\Delta t1 + \Delta t\_rand2$, that relay station 1 transmitted the relay signal with $\Delta t1 + \Delta t\_rand1$, and cancels its transmission of the relay signal. Thus, if channel quality $\geq$ Th1, the base station receives only the relay signal from relay station 1. This also holds true for cases where Th1 > channel quality $\geq$ Th2, and Th2 > channel quality $\geq$ Th3.

The configuration of the relay station according to the present embodiment is the same as that in FIG.5 (embodiment 1), but differs from embodiment 1 only in that delay control section 109 determines an amount of delay (second amount of delay) obtained by adding a random value to the amount of delay (first amount of delay) selected in accordance with channel quality, as described in the above.

Next, the operation flow for delay control at the relay station according to the present embodiment will be described using the flow chart of FIG.20.

In ST41, an amount of delay $\Delta tN$ in accordance with channel quality is selected based on the table shown in FIG.18.

In ST42, it is determined whether amount of delay $\Delta tN$ selected in ST41 is the maximum amount of delay ($\Delta t4$) amongst a plurality of amounts of delay set in the table shown in FIG.18.

If it is determined in ST42 that amount of delay ΔtN is the maximum amount of delay (Δt4) ("YES" in ST42), the flow proceeds to ST44 . Thus, in this case, the maximum amount of delay (Δt4) becomes the amount of delay Δt.

On the other hand, if it is determined in ST42 that amount of delay ΔtN is not the maximum amount of delay (Δt4) ("NO" in ST42), in ST43, Δt_rand is added to amount of delay ΔtN to determine amount of delay Δt.

Next, in ST44, it is determined whether the other relay station performed relay-transmission.

If it is determined in ST44 that the other relay station performed relay transmission ("YES" in ST44), relay transmission is cancelled in ST45.

On the other hand, if it is determined in ST44 that the other relay station did not perform relay transmission ("NO" in ST44), relay transmission is carried out with amount of delay Δt in ST46.

Thus, since in the present embodiment relay transmission is carried out using an amount of delay (second delay) obtained by adding a random value to an amount of delay (first amount of delay) selected in accordance with channel quality, it is possible to transmit a relay signal from one relay station only, even if the channel quality is the same at a plurality of relay stations.

In the present embodiment, each relay station may select an amount of delay (first amount of delay) in accordance with the MCS level in the relay transmission, with reference to the table in FIG.7, similar to embodiment 2. In this case, each relay station determines an amount of delay (second amount of delay) obtained by adding Δt_rand determined based on equation 1, to the amount of delay (first amount of delay) selected in accordance with the MCS level.

Since it is presumed that channel quality is biased to some extent, delay control section 109 may add Δt_rand if the amount of delay selected in accordance with channel quality is the amount of delay with the highest probability of being selected (probability of selection) Pr (ΔtN) amongst Δt1 to Δt4, but need not add Δt_rand otherwise. As a result, the use of an amount of delay with the highest probability of selection makes it possible to obtain effects similar to those described in the above text, and the use of amounts of delay other than those amounts of delay to which the adding of Δt_rand is considered unnecessary owing to the fact that their probability of selection is low in the first place, makes it possible to reduce the amount of processing and processing time for the relay-transmission, since the calculation of Rand(X) and the adding of Δt_rand are omitted.

Due to the same reason, the range X in "Rand (X)" may be different for each amount of delay. In other words, the range which Δt_rand can cover may differ for each one of a plurality of amounts of delay. For instance, if the selection probabilities Pr (ΔtN) of the above-mentioned Δt1, Δt2 and Δt3 are Pr (Δt2) > Pr (Δt3) > Pr (Δt1), a larger range X may be set for the amounts of delay with higher selection probabilities amongst Δt1, Δt2 and Δt3, as (Δt3 - Δt2) > (Δt4 - Δt3) > (Δt2 - Δt1). In other words, a maximum range X may be set for amounts of delay with the highest probability of selection amongst Δt1, Δt2 and Δt3.

Also, since a larger number of relay stations that relay and transmit a signal transmitted from the same mobile station increases the probability that channel quality becomes the same at a plurality of relay stations and relay signals are transmitted from a plurality of relay stations, the range X may be set to become larger, as the number of relay stations increases, to thus reduce the above probability.

If the priority differs for each relay station, as described in embodiment 3, only the relay stations with a low priority may be set to add Δt_rand as described in the present embodiment. Since each relay station cancels relay transmission if the other relay station has performed relay transmission, by performing adding of Δt_rand only at the relay stations with a low priority, it is possible to give priority to relay transmissions from relay stations with a high priority, if that that relay stations with a high priority and relay stations with a low priority select the same amount of delay.

The embodiments of the present invention have been described in the above text.

In the above-described embodiments, there may be 3 or more relay stations. Also, the relay station may perform the same operation at the time of receiving a retransmission request signal in frame 1. Also, another frame may be introduced between frame 1 and frame 2. Channel quality may be measured by using SIR, SNR, SINR, CIR, CNR, CINR, RSSI, reception intensity, receive power, interference power, error rate, transmission rate, throughput, interference amount, or MCS or the like at which a predetermined error rate can be satisfied. The settings in the tables may use the MCS level in place of channel quality, or may use channel quality in place of the MCS level.

In the above-described embodiments, the base station is sometimes designated as "Node B", and the mobile station, as "UE".

In the above-described embodiments, other relay stations may be present between the relay station and the base station or between the mobile station and the relay station.

If relay station 1 and relay station 2 in the above-described embodiments transmit a relay signal with the same amount of delay, relay station 1 may function as antenna 1, while relay station 2 may function as antenna 2, and the respective relay signals may be space-time coded (STBC: Space Time Block Code).

Also, although cases have been described with the above-described embodiments using examples where the present invention is configured by hardware, the present invention can also be implemented by software.

Each function block employed in the description of each of the aforementioned embodiments may typically be implemented as an LSI constituted by an integrated circuit. These may be individual chips or partially or totally contained on a single chip. "LSI" is adopted here but this may also be referred to as "IC", "system LSI", "super LSI", or "ultra LSI" depending on differing extents of integration.

Further, the method of circuit integration is not limited to LSI's, and implementation using dedicated circuitry or general purpose processors is also possible. After LSI manufacture, utilization of an FPGA (Field Programmable Gate Array) or a reconfigurable processor where connections and settings of circuit cells within an LSI can be reconfigured is also possible.

Further, if integrated circuit technology comes out to replace ZSI's as a result of the advancement of semi conductor technology or a derivative other technology, it is naturally also possible to carry out function block integration using this technology. Application in biotechnology is also possible.

The present application is based on Japanese Patent Application No.2005-098020, filed on March 30, 2005, and Japanese Patent Application No.2005-351232, filed on December 5, 2005, the entire contents of which are expressly incorporated by reference herein.

Industrial Applicability

The present invention can be applied to communication systems (for instance, multi-hop systems) or the like, in which a wireless communication apparatus such as a mobile station, a base station or the like performs wireless communication via a relay station.

**Claims**

1. A wireless communication apparatus that relays and transmits a transmission signal from a first wireless communication apparatus to a second wireless communication apparatus, the wireless communication apparatus comprising:

   a receiving section that receives the transmission signal;
   a delay section that delays a received signal by an amount of delay in accordance with one of channel quality between the wireless communication apparatus and the second wireless communication apparatus and a modulation and coding scheme level in the relay transmission; and
   a transmitting section that transmits the delayed signal to the second wireless communication apparatus.

2. The wireless communication apparatus according to claim 1, wherein the delay section increases the amount of delay if channel quality is low and decreases the amount of delay if channel quality is high.

3. The wireless communication apparatus according to claim 1, wherein the delay section increases the amount of delay if the modulation and coding scheme level is low and decreases the amount of delay if the modulation and coding scheme level is high.

4. The wireless communication apparatus according to claim 1, wherein the delay section employs an amount of delay that differs from a delay at another wireless communication apparatus that relays and transmits the transmission signal to the second wireless communication apparatus.

5. The wireless communication apparatus according to claim 1, wherein, if it is detected that another wireless communication apparatus relays and transmits the transmission signal to the second wireless communication apparatus, the transmitting section does not perform transmission to the second wireless communication apparatus.

6. The wireless communication apparatus according to claim 1, further comprising a table that provides a plurality of amounts respectively in association with a plurality of channel qualities or a plurality of modulation and coding scheme levels,
   wherein the delay section decides an amount of delay with reference to the table.

7. The wireless communication apparatus according to claim 6, wherein the table is set in accordance with a priority at each wireless communication apparatus that relays and transmits the transmission signal to the second wireless communication apparatus.

8. The wireless communication apparatus according to claim 6, wherein, with respect to the same channel quality, the table sets a smaller amount of delay if the priority is high and sets a larger amount of delay if the priority is low.

9. The wireless communication apparatus according to claim 6, wherein, in the table, an amount of delay at a channel quality below a predetermined quality are the same at a plurality of wireless communication apparatuses that relay and transmit the transmission signal to the second wireless communication apparatus.

10. The wireless communication apparatus according to claim 6, wherein, in the table, amounts of delay at a channel quality equal to or above a predetermined quality differ from each other at a plurality of wireless communication apparatuses that relay and transmit the transmission signal to the second wireless communication apparatus.

11. The wireless communication apparatus according to claim 1, wherein the delay section delays the received signal by a second amount of delay obtained by adding a random value to a first amount of delay, said first amount of delay being one of a plurality of amounts of delay that is selected in accordance with one of the channel quality and the modulation and coding scheme level.

12. The wireless communication apparatus according to claim 11, wherein the delay section delays the received signal by the second amount of delay if the selected first amount of delay corresponds to a specific one of the plurality of amounts of delay.

13. The wireless communication apparatus according to claim 11, wherein the delay section delays the received signal by the second delay amount, if the selected first amount of delay is not a maximum amount of delay amongst the plurality of amounts of delay.

14. The wireless communication apparatus according to claim 11, wherein the delay section delays the received signal by the second amount of delay if the selected first amount of delay has a highest probability of selection amongst the plurality of amounts of delay.

15. The wireless communication apparatus according to claim 11, wherein a range that the random value can cover varies between the plurality of amounts of delay.

16. The wireless communication apparatus according to claim 15, wherein a largest range is set with respect to an amount of delay with the highest probability of selection amongst the plurality of amounts of delay.

17. The wireless communication apparatus according to claim 15, wherein a larger range is set with respect to an amount of delay with a higher probability of selection amongst the plurality of amounts of delay.

18. The wireless communication apparatus according to claim 11, wherein the range that the random value can cover is set to be larger as the number of wireless communication apparatuses that relay and transmit the transmission signal increases.

19. A wireless communication method that is employed in a wireless communication system where there are a plurality of third wireless communication apparatuses that relay and transmit a signal from a first wireless communication apparatus to a second wireless communication apparatus,
wherein a third wireless communication apparatus delays a signal from the first wireless communication apparatus by an amount of delay in accordance with one of channel quality between the third wireless communication apparatus and the second wireless communication apparatus and a modulation and coding scheme level in the relay transmission, and relays and transmits the signal to the second wireless communication apparatus.

20. The wireless communication method according to claim 19, wherein the third wireless communication apparatuses delays signals from the first wireless communication apparatus by respective amounts of delay that differ from one another.

21. The wireless communication method according to claim 19, wherein only one of the third wireless communication apparatuses with the smallest amount of delay perform relay transmission.

BASE STATION

RELAY STATION 1

RELAY STATION 2

MOBILE STATION

FIG.1

| | CHANNEL QUALITY ≥ Th | Th > CHANNEL QUALITY |
|---|---|---|
| AMOUNT OF DELAY | $\Delta t1$ | $\Delta t2$ |

FIG.2

FIG.3

MOBILE STATION    RELAY STATION 1    RELAY STATION 2    BASE STATION

FRAME 1

TRANSMISSION
SIGNAL

DECIDE ON $\triangle$t2    DECIDE ON $\triangle$t2

$\triangle$t1

FRAME 2

$\triangle$t2

RELAY SIGNAL    RELAY SIGNAL

FIG.4

FIG.5

START

ST11
CHANNEL QUALITY
≥ Th
NO

YES

ST13
DID THE OTHER
RELAY STATION PERFORM
RELAY-TRANSMISSION?
NO

ST12
RELAY AND
TRANSMIT WITH
Δt1

YES

ST15
RELAY AND TRANSMIT
WITH Δt2

ST14
CANCEL RELAY

END

FIG.6

| | 64QAM | 16QAM | 8PSK | QPSK | BPSK |
|---|---|---|---|---|---|
| AMOUNT OF DELAY | Δt1 | Δt2 | Δt3 | Δt4 | Δt5 |

FIG.7

18

MOBILE STATION    RELAY STATION 1    RELAY STATION 2    BASE STATION

FRAME 1

TRANSMISSION
SIGNAL

DECIDE ON △t4    DECIDE ON △t3

△t1
64QAM

△t2
16QAM

FRAME 2

△t3
8PSK

DETECT    RELAY SIGNAL
(8PSK)

△t4
QPSK

△t5
BPSK

FIG.8

200

101

110 RADIO TRANSMITTING SECTION

102 RADIO RECEIVING SECTION

202 DELAY CONTROL SECTION

201 MCS DECIDING SECTION

103 CHANNEL QUALITY ACQUIRING SECTION

104 SIGNAL DETECTING SECTION

108 MODULATING SECTION

107 ENCODING SECTION

105 DEMODULATING SECTION

106 DECODING SECTION

FIG.9

ST21 — DECIDE AMOUNT OF DELAY $\Delta tN$

ST22 — DID THE OTHER RELAY STATION PERFORM RELAY-TRANSMISSION?

NO

YES

ST24 — RELAY AND TRANSMIT WITH DELAY AMOUNT $\Delta tN$

ST23 — CANCEL RELAY

START

END

FIG.10

EP 1 860 796 A1

| PRIORITY: HIGH | CHANNEL QUALITY ≥Th1 | Th1 > CHANNEL QUALITY ≥Th2 | Th2 > CHANNEL QUALITY ≥Th3 | Th3 > CHANNEL QUALITY ≥Th4 | Th4 > CHANNEL QUALITY |
|---|---|---|---|---|---|
| AMOUNT OF DELAY | $\Delta t1$ | $\Delta t2$ | $\Delta t3$ | $\Delta t4$ | NO RELAY |

FIG.11A

| PRIORITY: LOW | CHANNEL QUALITY ≥Th1 | Th1 > CHANNEL QUALITY ≥Th2 | Th2 > CHANNEL QUALITY ≥Th3 | Th3 > CHANNEL QUALITY ≥Th4 | Th4 > CHANNEL QUALITY |
|---|---|---|---|---|---|
| AMOUNT OF DELAY | $\Delta t2$ | $\Delta t3$ | $\Delta t4$ | $\Delta t4$ | NO RELAY |

FIG.11B

EP 1 860 796 A1

MOBILE STATION    RELAY STATION 1    RELAY STATION 2    BASE STATION

FRAME 1

TRANSMISSION
SIGNAL

DECIDE ON △t1    DECIDE ON △t2

△t1

RELAY SIGNAL    DETECT

△t2

FRAME 2

△t3

△t4

FIG.12

| PRIORITY: HIGH | CHANNEL QUALITY ≥ Th1 | Th1 > CHANNEL QUALITY ≥ Th2 | Th2 > CHANNEL QUALITY ≥ Th3 | Th3 > CHANNEL QUALITY ≥ Th4 | Th4 > CHANNEL QUALITY |
|---|---|---|---|---|---|
| AMOUNT OF DELAY | $\Delta t1$ | $\Delta t3$ | $\Delta t5$ | $\Delta t7$ | NO RELAY |

FIG.13A

EP 1 860 796 A1

| PRIORITY: LOW | CHANNEL QUALITY ≥ Th1 | Th1 > CHANNEL QUALITY ≥ Th2 | Th2 > CHANNEL QUALITY ≥ Th3 | Th3 > CHANNEL QUALITY ≥ Th4 | Th4 > CHANNEL QUALITY |
|---|---|---|---|---|---|
| AMOUNT OF DELAY | $\Delta t2$ | $\Delta t4$ | $\Delta t6$ | $\Delta t7$ | NO RELAY |

FIG.13B

FIG.14

FIG.15

EP 1 860 796 A1

FIG.16

| PRIORITY: HIGH | CHANNEL QUALITY ≥ Th1 | Th1 > CHANNEL QUALITY ≥ Th2 | Th2 > CHANNEL QUALITY ≥ Th3 | Th3 > CHANNEL QUALITY ≥ Th4 | Th4 > CHANNEL QUALITY |
|---|---|---|---|---|---|
| AMOUNT OF DELAY | $\Delta t1$ | $\Delta t2$ | $\Delta t3$ | $\Delta t7$ | NO RELAY |

FIG.17A

EP 1 860 796 A1

| PRIORITY: LOW | CHANNEL QUALITY ≥ Th1 | Th1 > CHANNEL QUALITY ≥ Th2 | Th2 > CHANNEL QUALITY ≥ Th3 | Th3 > CHANNEL QUALITY ≥ Th4 | Th4 > CHANNEL QUALITY |
|---|---|---|---|---|---|
| AMOUNT OF DELAY | $\Delta t4$ | $\Delta t5$ | $\Delta t6$ | $\Delta t7$ | NO RELAY |

FIG.17B

EP 1 860 796 A1

| | CHANNEL QUALITY ≥ Th1 | Th1 > CHANNEL QUALITY ≥ Th2 | Th2 > CHANNEL QUALITY ≥ Th3 | Th3 > CHANNEL QUALITY |
|---|---|---|---|---|
| AMOUNT OF DELAY | $\Delta t1$ | $\Delta t2$ | $\Delta t3$ | $\Delta t4$ |

FIG.18

EP 1 860 796 A1

MOBILE STATION    RELAY STATION 1    RELAY STATION 2    BASE STATION

FRAME 1

TRANSMISSION
SIGNAL

SELECT $\Delta t1$

SELECT $\Delta t1$

ADD $\Delta t\_rand1$

ADD $\Delta t\_rand2$

$\Delta t1$

$\Delta t1 + \Delta t\_rand1$

$\Delta t1 + \Delta t\_rand2$

RELAY
SIGNAL

DETECT

$\Delta t2$

FRAME 2

$\Delta t3$

$\Delta t4$

FIG.19

33

START

ST41

SELECT AMOUNT OF DELAY $\Delta tN$

ST42

IS $\Delta tN$ MAXIMUM AMOUNT OF DELAY?

NO

ST43

ADD $\Delta t\_rand$

YES

ST44

DID THE OTHER RELAY STATION PERFORM RELAY-TRANSMISSION?

NO

ST46

RELAY AND TRANSMIT WITH AMOUNT OF DELAY $\Delta t$

YES

ST45

CANCEL RELAY

END

FIG.20

34

## INTERNATIONAL SEARCH REPORT

| International application No. |
| --- |
| PCT/JP2006/306347 |

| A. CLASSIFICATION OF SUBJECT MATTER |
| --- |
| *H04B7/24*(2006.01), *H04B7/15*(2006.01), *H04B7/26*(2006.01) |

According to International Patent Classification (IPC) or to both national classification and IPC

| B. FIELDS SEARCHED |
| --- |
| Minimum documentation searched (classification system followed by classification symbols) |
| H04B7/24-7/26, H04Q7/00-7/38, H04B7/15 |

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| A | JP 2003-198442 A (Hitachi, Ltd.), 11 July, 2003 (11.07.03), Par. Nos. [0026], [0032], [0035]; Fig. 4 & US 2003/0124976 A1 | 1-21 |
| A | JP 2000-041279 A (NEC Corp.), 08 February, 2000 (08.02.00), Par. Nos. [0017], [0018] (Family: none) | 1-21 |

☐ Further documents are listed in the continuation of Box C.   ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 22 June, 2006 (22.06.06) | 04 July, 2006 (04.07.06) |

| Name and mailing address of the ISA/ | Authorized officer |
| --- | --- |
| Japanese Patent Office | |
| Facsimile No. | Telephone No. |

Form PCT/ISA/210 (second sheet) (April 2005)

**EP 1 860 796 A1**

**REFERENCES CITED IN THE DESCRIPTION**

**Patent documents cited in the description**

- JP 2004254308 A
- JP 2001189971 A
- JP 2005098020 A
- JP 2005351232 A